# EUROPEAN PATENT APPLICATION

(11) **EP 4 489 347 A1**
(43) Date of publication of application: **08.01.2025**
(21) Application number: 23183855.8
(22) Date of filing: 06.07.2023
(51) Int. Cl.: H04L 9/40, H04W 12/06, H04W 12/121, H04W 12/71, H04W 84/12

(54) **PROCESSING NETWORK MESSAGES IN CUSTOMER-PREMISES EQUIPMENT**

(71) Applicant: Cujo LLC, Covina, CA 91723 (US)
(72) Inventor: Tevesz, Andras, 1082 Budapest (HU)
(74) Representative: TBK

(57) **Abstract**

Network messages in a directly routed local area network (LAN) of a customer-premises equipment (CPE) are subscribed (108) to. The CPE is configured to provide the directly routed LAN for data communication, and an access for the data communication to a wide area network (WAN). The network messages in the directly routed LAN are received (110). The network messages are aggregated (114) to local state objects maintained in the CPE, wherein each local state object contains data of a single connected device. Update data of the local state objects is transmitted (124) via the WAN to remote state objects maintained outside of the CPE.

## Description

### FIELD

The invention relates to a method, apparatus, computer program product, and computer-readable medium.

### BACKGROUND

Device identification is a capability to detect and identify a connected device in a home/office local area network (LAN) provided by a customer-premises equipment (CPE) to increase cybersecurity. Traditionally, the Medium/Media Access Control (MAC) address is assigned by a device manufacturer and used in the data communication within the LAN for the device identification. However, the MAC randomization, which anonymizes and randomizes the MAC address to increase privacy, hinders the device identification based on the MAC address. In the MAC randomization, instead of using the vendor-embedded MAC address, or a first randomized MAC address used for an initial device identification, the connected device transmits a second randomized MAC address. Machine learning (ML) may be used to overcome the obfuscation technologies. Currently, the CPE collects device information from data transmissions related to a connected device for a limited time period and uploads the collected device information into a centralized computing resource (such as a cloud service). Network protocols that generate a huge amount of constant traffic are ignored or throttled after predetermined resource limits are reached. The centralized computing resource uses ML algorithms and device fingerprinting to identify the connected devices based on the collected device information. Currently, the centralized computing resource is used as a passive data storage. The device identification may be performed periodically, or on-demand, whereby the results of the device identification suffer as the emerging new connected devices may not even be noticed, or the collected device information may miss important device fingerprinting parameters.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1 is a flowchart illustrating examples of a method;
FIG. 2A and FIG. 2B are block diagrams illustrating example implementation environments for the method;
FIG. 3A and FIG. 3B are sequence charts illustrating example communication between various actors of the method;
FIG. 4A, FIG. 4B, and FIG. 4C illustrate example operating sequences of the various actors;
FIG. 5A and FIG. 5B are block diagrams illustrating examples of a cybersecurity apparatus;
FIG. 6 is a block diagram illustrating an example of a connected device;
FIG. 7 is a block diagram illustrating an example of a computing resource; and
FIG. 8A and FIG. 8B are block diagrams illustrating examples of a customer-premises equipment.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

Machine learning (ML) is used to overcome the obfuscation technologies. To perform the device identification using ML algorithms and device fingerprinting, the customer-premises equipment (CPE) subscribes to network messages. The CPE aggregates received network messages to local state objects maintained in the CPE, and transmits update data of the local state objects to remote state objects maintained outside of the CPE (such as in a centralized computing resource). In this way, the CPE collects device information continuously and uninterruptedly. The device identification may be performed for a single connected device by intercepting its data communication, and identifying the connected device based on contents of the intercepted data communication analyzed in view of the local state objects, and/or the remote state objects.

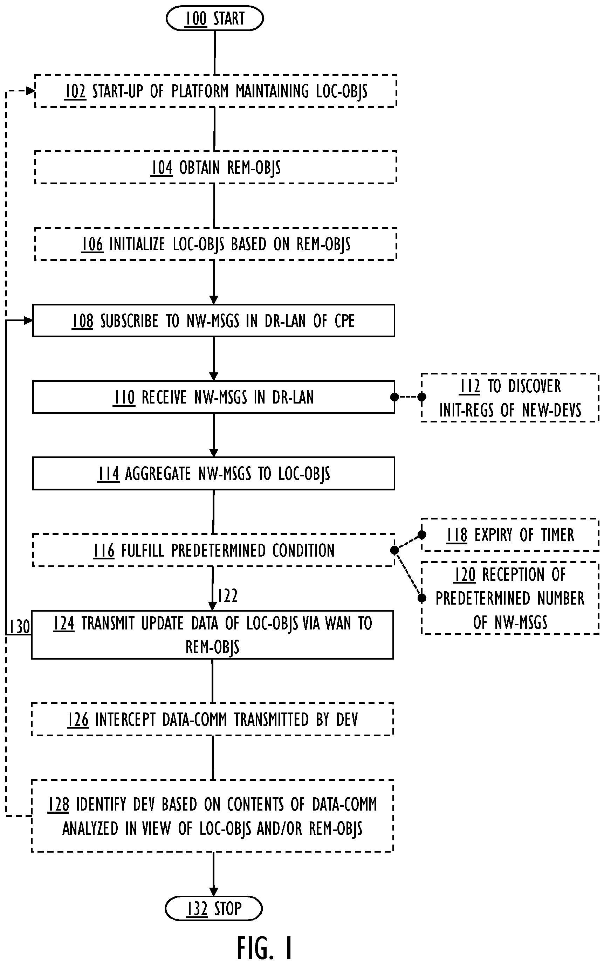

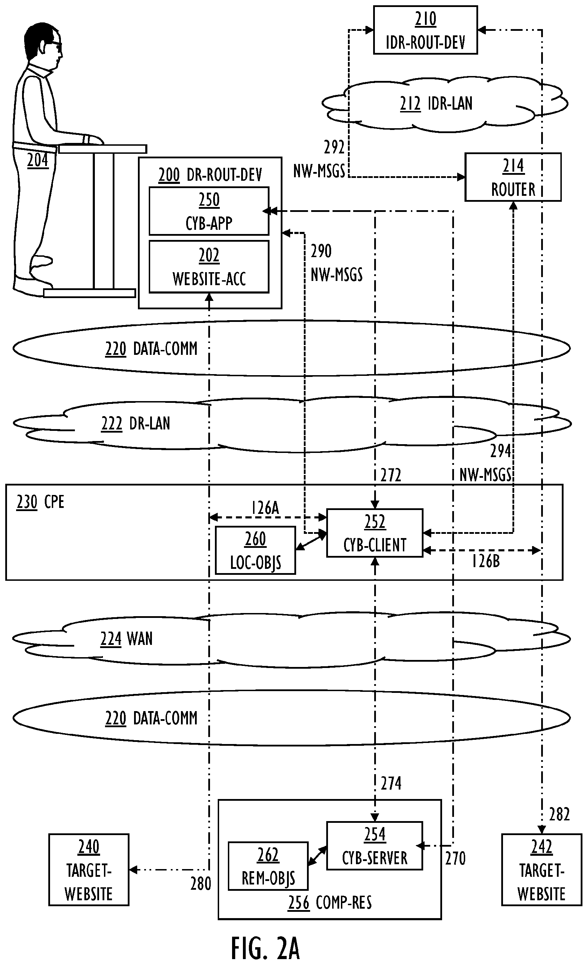

FIG. 1 illustrates a method. The method performs operations related to a processing of network messages in the CPE. Note that in the following description, processing related to the network messages uses two-way communication between various network elements referenced with reference signs 290, 292, 294, see FIG. 2A.

The method starts in 100 and ends in 132. The method may run in principle endlessly. The infinite running may be achieved by looping 130 back after an operation 124 to an operation 108 as shown in FIG. 1, or looping back 130 from a later operation 128, and the looping back 130 may also be performed to an earlier operation 102.

The operations are not strictly in chronological order in FIG. 1, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

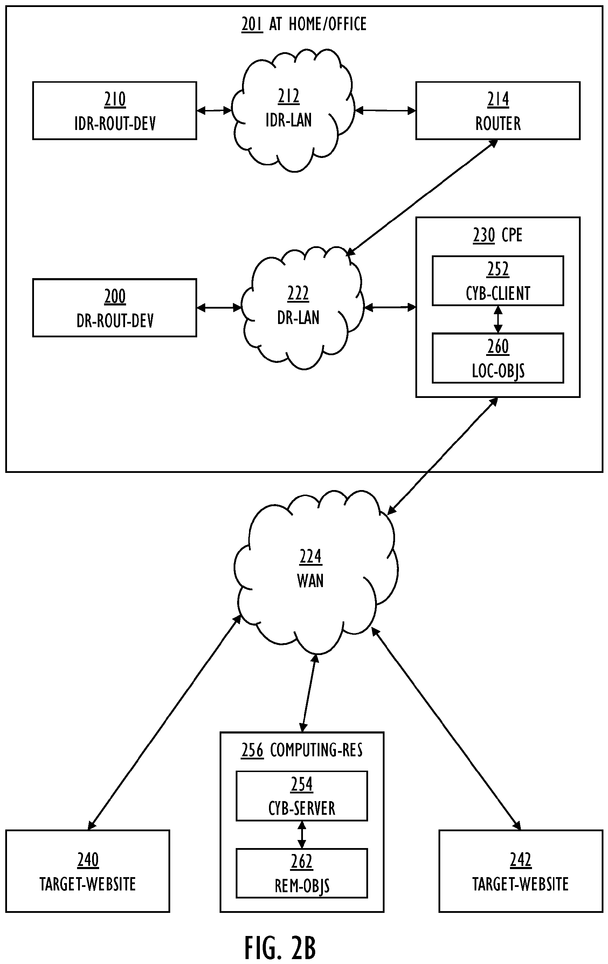

FIG. 2A and FIG. 2B illustrate example implementation environments for the method. The method may be a computer-implemented method. The method operates within a CPE 230, but also optionally in part in a (centralized) computing resource 256.

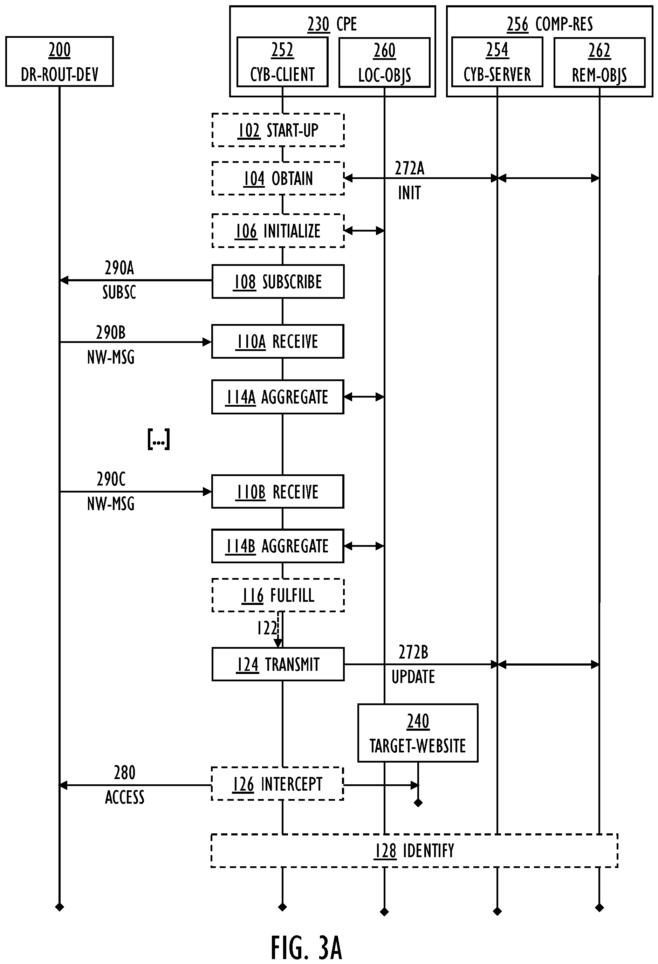

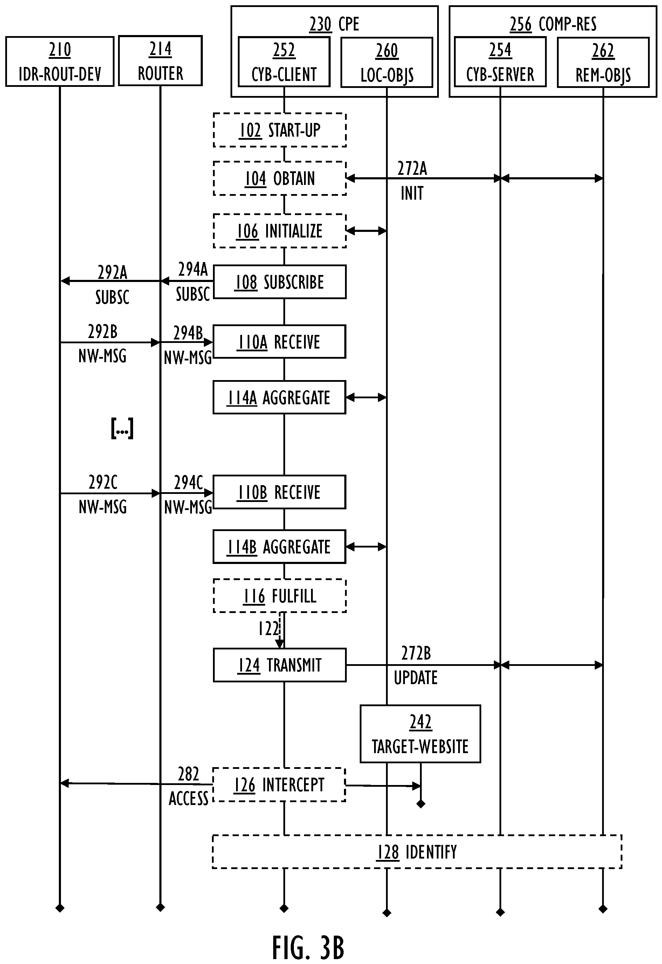

FIG. 3A and FIG. 3B illustrate communication between various actors of the method.

In FIG. 3A, at least a part of network messages relate to directly routable connected devices 200 connected to a directly routed local area network (LAN) 222. In this case, directly routable connected devices 200 connected to the directly routed LAN 222 are configured to transmit the at least the part of the network messages.

In FIG. 3B, at least a part of the network messages relate to indirectly routable connected devices 210 connected to an indirectly routed LAN 212. In this case, a network router 214 is configured to transmit the at least the part of the network messages on behalf of the indirectly routable connected devices 210. The directly routed LAN 222 and the indirectly routed LAN 212 may be adjacent networks, or at least partly overlapping networks. The networks 212, 222 may use different methods to segregate sub-sections from each other. The networks sections 212, 222 are separated, and their inter-communication is handled by the network router 214. The network router 214 is connected to the directly routed LAN 222, and to the indirectly routed LAN 212. The network router 214 may be implemented as a border router, a network bridge, a network switch (such as a layer 3 switch combining functionalities of a switch and a router), or a network access point (with a wired connection to the CPE 230), for example. The network router 230, besides forwarding data packets between the networks 212, 222, may also contain other functionalities such as a network address translation (NAT), which maps IP address spaces between the networks 212, 222. The networks 212, 222 may also be virtual local area networks (VLAN) partitioned and isolated at the data link layer.

Traditional network asset discovery tools operating in the domain of the directly routed LAN 222 have difficulties in dealing with the indirectly routed LAN 212. The terms "directly routed" and "indirectly routed" refer to the characteristics of the routing: in the directly routed LAN 222, the data packets may be routed directly based on a destination IP address of each data packet, whereas the data packets, if addressed to a network node in the indirectly routed LAN 212, cannot be directly routed from the directly routed LAN 222 to the indirectly routed LAN 222 as their IP address spaces are unreachable to each other. A network address translation may be required in between, for example.

In an example, the indirectly routed LAN 212 comprises one of a mesh network and a personal area network (PAN). The mesh network refers to a LAN topology, wherein infrastructure nodes connect directly, dynamically and non-hierarchically to other nodes and route cooperatively the transmitted data. An example mesh network is implemented according to the Matter^{®} standard. The PAN may be implemented using low-powered, short-distance wireless network technology such as Bluetooth^{®}, or Zigbee^{®}.

In an example, the indirectly routable connected devices 210 comprise Internet of Things (IoT) devices. The indirectly routable connected IoT device 210 may operate according to a suitable connectivity standard operative in the indirectly routed LAN 212 including, but not being limited to: Matter^{®}, Thread^{®}, Wi-Fi^{®}, Zigbee^{®}, Z-Wave^{®}, Bluetooth^{®}.

First, network messages are subscribed 108 to in the directly routed LAN 222. The CPE 230 is configured to provide the directly routed LAN 222 for a data communication, and an access for the data communication to a wide area network (WAN) 224 such as the Internet. This may be implemented so that the CPE 230 is configured to provide the LAN 222 for a data communication 220 of the connected device 200, and an access for the data communication 280 to the WAN 224. In the data communication 220, the data packets may be transferred from and to the connected device 200. As shown in FIG. 3A, the CPE 230 may perform the subscribing 108 using a communication 290A with each directly routable connected device 200. As shown in FIG. 3B, the CPE 230 may perform the subscribing 108 using a communication 294A with the network router 214, and the network router 214 may perform a part of the subscribing 108 using a communication 292A with each indirectly routable connected device 210.

In an example, the network messages comprise zero-configuration (zeroconf) networking messages. Zeroconf refers to technologies enabling an automatic creation of a computer network based on the Internet protocol suite without manual operator intervention or special configuration servers. Zeroconf performs an automatic assignment of numeric network addresses for connected devices, an automatic distribution and resolution of computer hostnames, and an automatic location of network services. The network messages of zeroconf include, but are not limited to the following network protocols: multicast domain name system (mDNS) messages, and dynamic host configuration protocol (DHCP) messages.

In an example, the network messages comprise recurring network messages, i.e., network messages that happen many times, again and again. The recurring network messages may relate to machine to machine (M2M) communication received by the CPE 230 from the directly routable connected devices 200 and/or from the network routers 214 on behalf of the indirectly routable connected devices 210.

In an example, mDNS messages are used to discover otherwise inaccessible indirectly routable connected devices 210. The mDNS is a multicast network protocol with a proxy support. The proxy (or repeater) may replay the mDNS multicast messages transmitted in the indirectly routed LAN 212 for the directly routed LAN 222. The Thread^{®} network uses a thread border router (TBR) 214 to advertise the addresses of the Thread network 212 to the home network 222.

It is envisaged that the network messages may comprise messages related to the so-called banner grabbing. For example, when starting a connection to a File Transfer Protocol (FTP) server, the FTP server will answer with a banner defining its services. The banner grabbing network messages comprise FTP messages, Hyper Text Transfer Protocol (HTTP) messages, and Simple Mail Transfer Protocol (SMTP) messages.

In an example shown in Table 1, the CPE 230 blocks incoming traffic from the public internet 224 and allows outgoing traffic from the internal network 222. The other network router 214 blocks incoming traffic from the internal network 222, but allows outgoing traffic from the deeper internal network 212. Consequently, the CPE 230 is not able to connect to the deeper internal network hosts 210 and does not see the network traffic in the deeper internal network 212. If there is a mDNS proxy on the other network router 214, the message emitted by 10.10.10.2 will be forwarded via 10.10.10.1 (= the other network router 214) to the internal network 222. And the CPE 230 in the internal network 222 receives the message emitted by 10.10.10.2 and repeated via the 10.10.10.1 router. However, the CPE 230 is not able to see the host 210 in the deeper internal network 212. Address format in Table 1 for a router is [external IP, internal IP].

**Table 1: IP addresses**

| CPE 230 | DR-LAN 222 | ROUTER 214 | IDR-LAN 212 |
|---|---|---|---|
| [PUBIP,192.168.45.1] | 192.168.45.1/24 | [192.168.45.2,10.10.10.1] | 10.10.10.1/24 |

In an example, the network messages include, but are not limited to: an addition of a new device event, a service announcement, a service deletion, an Internet Protocol (IP) announcement, and an IP request.

The network messages are received 110 in the directly routed LAN 222. This may be implemented so that the network messages are transmitted over the directly routed LAN 222 from network nodes (such as from the directly routable connected devices 200, and from the network router 214) and received by the CPE 230 from the directly routed LAN 222.

The network messages may be received 110 repeatedly. The term "repeatedly" may here refer to a continuous and uninterrupted reception 110 of the network messages. As was explained in the background section, the prior art collection of device information is performed for a limited time period, periodically, or on-demand, whereby the results of the device identification suffer as the emerging new connected devices may not even be noticed, or the collected device information may miss important device fingerprinting parameters. The repeated, or continuous and uninterrupted, reception 110 of the network messages distinguishes over the periodical reception of the network messages, and brings the benefit of an improved device identification. Such repeated reception of the network messages in enabled by the use of the local and remote state objects (limiting the required network traffic). In this way, network protocols that generate a huge amount of constant traffic need not be ignored or throttled but they may be constantly monitored.

As shown in FIG. 3A, the CPE 230 receives 110A, 110B N network messages 290B, 290C from the directly routable connected device 200. As shown in FIG. 3B, the CPE 230 receives 110A, 110B N network messages 294B, 294C from the network router 214, which in turn may have received N network messages 292B, 292C from the indirectly routable connected device 210. N may be an integer number greater than one.

In an example, the network messages are received 110 in the directly routed LAN 222 so that they are received 112 to discover initial registrations of new connected devices 200, 210. In this way, the new connected device may be detected as soon as it connects to the network 210, 212. Consider for example a sleepy end device (SED) of the Matter^{®} standard, which extends its battery life by turning off the radio at times, thus reducing the power consumption of the SED. Such connected device 210 may be detected fast and reliably with the reception 110 of the network messages. IoT devices 210 operating according to another connectivity standard may also utilize similar sleep techniques, which makes them hard to detect using the conventional device identification techniques.

The (repeatedly received) network messages are aggregated 114, 114A, 114B to local state objects 260 maintained in the CPE 230. Each local state object contains data of a single connected device 200, 210.

Update data of the local state objects 260 is transmitted 124 via the WAN 224 to remote state objects 262 maintained outside of the CPE 230, in a computing resource 256, for example.

In an example illustrated in FIG. 1, transmitting 124 the update data of the local state objects 260 via the WAN 224 to the remote state objects 262 maintained outside of the CPE 230 is triggered 122 in response to fulfilling 116 a predetermined condition. The predetermined condition may be an expiry 118 of a timer. The timer may be set to a desired period, ten seconds, one minute, ten minutes, one hour, or any other time period. The set timer period may depend on the frequency of the received network messages, for example. Alternatively, the predetermined condition may be a reception 120 of a predetermined number of network messages. The predetermined number may be the earlier mentioned integer N, for example.

In an example, the local state object 260 and the remote state object 262 are stored and transmitted using a schemeless data interchange format that uses attribute-value pairs to store data. The schemeless data interchange format may provide a good compressibility and extendibility. The schemeless data interchange format includes, but is not limited to: JavaScript Object Notation (JSON), and Binary JSON (BSON). If a complex data structure is needed, a JSON or BSON structure may be used. If the data lacks structures, a simpler key-value store may be used.

An example of a JSON structure is as follows:

```
           COMPLEX_STATE_OBJECT (JSON) = {
              "name": "sample device",
              "supported_flags": [
                     "sleepy_device",
                     "iot_device",
                     "matter_device",
                     "wifi_device",
                     "thread_device"
              ].
              "unique identifiers": {
                     "MAC": "AA:BB:CC:DD:EE",
                     "SERIAL": "123456" } }
```

An example of a simple key-value store is as follows:

```
SIMPLE_STATE_OBJECT (KeyValue) =
           Cache_hit_rate = 55
           Reboot_counter = 54
           Data_sent = 132343
           Connection_blocked = 132
```

The local state change describes the data structure changes as well as the value changes.
1) Addition of new key and value either to the JSON structure or key-value structure:
   a. JSON sample "unique_identifiers"."uuid" = "123e4567-e89b-12d3-a456-426614174000"
   b. Key-value sample uuid = 123e4567-e89b-12d3-a456-426614174000
2) Deletion of a key and its value either to the JSON structure or key-value structure:
   a. "unique_identifiers"."uuid"
   b. uuid
3) Update of a value of the key either to the JSON structure or key-value structure:
   a. "unique_identifiers"."uuid" = "a23e4567-e89b-12d3-a456-426614174000"
   b. uuid = a23e4567-e89b-12d3-a456-426614174000

The change list of the local state object 260 may be implemented so that three separate lists (ADD,REMOVE,UPDATE) are collected as the update data and the lists are transmitted to the remote state objects 262.

An example use case is to store software versions of all IoT devices 210 in a household locally on the CPE 230 in the key-value format. The version information is extracted from the mDNS messages. The messages are regularly emitted by the IoT devices 210, and after an over-the-air (OTA) update, the version numbers will change: after the successful update, the software version of the IoT device 210 will differ from the version stored in the local state object 260. Update data is created to describe the new value: software_version=new_value. When the predetermined time has passed, the update data is sent to the remote state object 262 for persistent storage. The remote state object 262 of the IoT device 210 is updated according to the update data. In a complex home network, multiple changes may happen between the updates. Multiple changes are stored as a list of changes:
1. addition of new device event.
2. mDNS service first announcement
3. mDNS IP announcement
4. mDNS device first deletion
5. mDNS service first announcement
6. DHCP IP request
7. Metadata, such as from NetFlow: device A talks to device B via port C (443, 5540, ...) on protocol D (UDP, TCP, ...)
8. etc.

Each event may contain multiple changes, and local changes are aggregated.

In an example, local state objects 260 are maintained in a rapidly changing home network environment 212, 222. A local cache is built on the CPE 230 from network reputation data and stored in the computing resource 256 to speed up bootstrap process after a device reboot or an application malfunction. The local state objects 260 and their synchronization to the remote state objects 262 is used to store network telemetry data. To reduce the network traffic, the local changes are periodically uploaded to the computing resource 256 from the CPE 230. The remote state objects 262 are updated based on the received change events as the update data. In case the CPE 230 is restarted, the CPE 230 requests the last known state from the computing resource 256 and the CPE 230 continues to process the local events. The computing resource 256 may perform the main device identification process, but information gathering and processing may happen in the CPE 230. Especially, the CPE 230 preprocesses the received network messages to reduce the network traffic.

The synchronization between the local state objects 260 and the remote state objects 262 may be performed in the same way as a journaling file system works by keeping track of operations not committed to files in a separate data structure called a journal. The journal is in a separate portion of the disk (such as a solid-state disk, SSD or a hard-disk drive, HDD). Each time an update is made to a file, two things happen sequentially: update the log (implemented as a circular buffer), and update the actual file in its permanent location. The local state object and remote state object works similar in terms of the separated data structure for changes, and the local state values are updated after the change is recorded.

In an example, the data of the single connected device 200, 210 in each local state object 260 comprises at least one unique device-specific property of the single connected device 200, 210, such as the MAC address, and/or the IP address. The active MAC address of the connected device 200, 210 may be a randomized MAC address of the connected device 200, 210. The randomized MAC address of the connected device 200, 210 is different from the earlier MAC address of the connected device 200, 210 used for an initial registration to at least one service in the CPE 230. The connected device 200, 210 may perform the initial registration to the at least one service while the connected device 200, 210 connects to the network 212, 222 for the first time. The earlier MAC address of the connected device 200, 210 may be a vendor-embedded MAC address, or a randomized MAC address used for an initial registration to at least one service in the CPE 230. The vendor-embedded MAC address may be an organizationally unique identifier (OUI). The OUI may be a 24-bit number used to identify the connected device 200, 210 as manufactured by a specific vendor.

The described four operations 108, 110, 114, 124 implement an architecture, which enables efficient reception, aggregation, and processing of the network messages using the local state objects 260 and the remote state objects 262. The device information may be continuously updated based on received events in the network messages. The local state objects 260 and the remote state object 262 are maintained to contain information about the connected devices 200, 210. The local state objects 260 are continuously updated with new changes and periodically sent to the remote state objects 262. In this way, the described network message processing solves the limited time frame as well as the throttle of the data collection issue. It provides a solution to speed up the synchronization process. It reduces the network traffic as it collects and aggregates changes and events locally. It solves other issues, wherein the CPE device resource limitation is preventing persistent data storage.

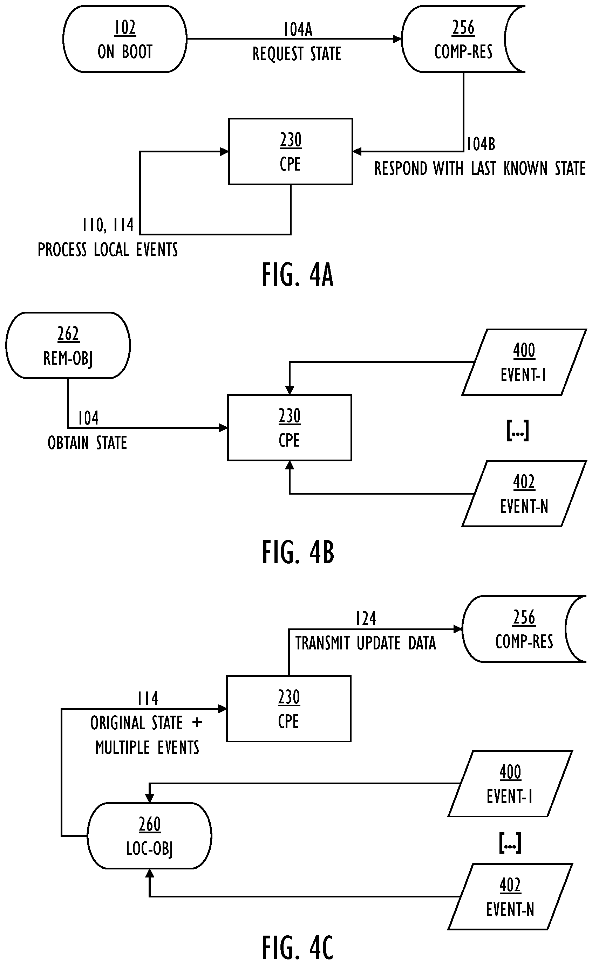

In an example, the local state objects 260 may be initialized based on the remote state objects 262. This may be implemented so that in response to a start-up 102 of a platform maintaining the local state objects 260, the remote state objects 262 are obtained 104, and the local state objects 260 are initialized 106 based on the (obtained) remote state objects 262. The platform may be the CPE 230, or a software that performs the processing related to the network messages, such as a cybersecurity client 252 (explained later in detail). FIG. 4A illustrates an example, which starts on a boot 102 of the platform. The computing resource 256 is requested 104A the state, and the computing resource 256 responds 104B with the last known state to the CPE 230, which then processes 110, 114 the local events. In FIG. 4B, the local state objects 260 in the CPE 230 have obtained states from the remote state objects 262, and the CPE 230 then aggregates many events 400, 402 into the local state objects 260. In FIG. 4C, local state objects 260 have aggregated the events 400, 402 so that the original state has been updated 114 with multiple events in the CPE 230, and the CPE 230 then transmits 124 the update data to the computing resource 256.

In an example, the described processing of the network messages is used as an integral part of the device identification. Data communication 280/282 in the directly routed LAN 222 transmitted by a connected device 200/210 is intercepted 126, and the connected device 200/210 is identified 128 based on contents of the (intercepted) data communication 280/282 analyzed in view of the local state objects 260 and/or the remote state objects 262.

As used herein, the term "connected device" 200, 210 refers to a physical device with communication capabilities configured to perform data communication 280, 282 via the directly routed LAN 222 with the WAN 224, or via the indirectly routed LAN 212, the network router 214, and the directly routed LAN 222 with the WAN 224.

As shown in FIG. 2A, the directly routable connected device 200 is configured to execute a website access application 202, such as web user interface application (a web browser, for example), or a stand-alone application (a mobile app, for example), and as a result, the data communication 220 including network traffic 280 between the directly routable connected device 200 and an accessed website 240 via the directly routable LAN 222 and the WAN 224 is caused. The website access application 202 may automatically cause the data communication 220, or, alternatively, the data communication 220 may be generated as a result of an action by a user 204 through user interface controls of the website access application 202. Similarly, the indirectly routable connected device 210 contains an application causing data communication 220 including network traffic 282 between the indirectly routable connected device 210 and an accessed website 242 via the indirectly routed LAN 212, the directly routed LAN 222, and the WAN 224.

The connected device 200, 210 may create a connection 280, 282 using a packet protocol for the website access application of the connected device 200, 210 to the target website 240, 242. The target website 240, 242 may host a server application enabling access by the website access application. The packet protocols include, but are not limited to, Transmission Control Protocol/Internet Protocol (TCP/IP), User Datagram Protocol/Internet Protocol (UDP/IP), and QUIC, which establishes a multiplexed transport on top of the UDP. Various Hypertext Transfer Protocol/Hypertext Transfer Protocol Secure (HTTP/HTTPS) requests may then be transferred in the connection 280, 282 (using TCP streams or UDP datagrams, for example). In the Internet protocol suite, the connection 280, 282 is operated in a link layer, an internet layer, and a transport layer, and the requests transmitted in the connection 280, 282 are operated in an application layer.

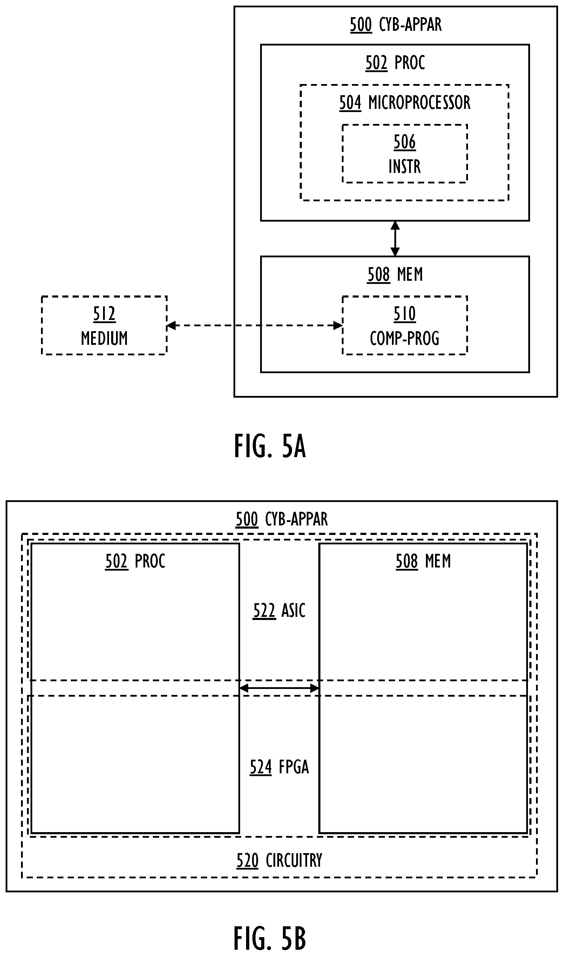

The data communication 220 may be intercepted by a cybersecurity apparatus 500 (described later with reference to FIG. 5A, and FIG. 5B). The intercepted data communication 220 may be analyzed in order to perform a device identification procedure, by a cybersecurity client 252, possibly augmented by a cybersecurity server 254, or by a device intelligence client supported by a processing cloud (not illustrated in FIG. 2A). Machine learning algorithms may use a number of other data items (such as device-specific unique radio interface characteristics, and other active and historic unique identifiers related to the connected apparatus and its communication) to enable the device identification despite of the MAC randomization. Basically, the objective is to detect that the same connected device 200 may use an active MAC address, and one or more earlier MAC addresses, for example. This is described in various applications and patents by the applicant, incorporated herein by reference in all jurisdictions where applicable, such as in US 2022/0021670 A1, US 2022/0322089 A1, and US 11,528,189 B1.

In the above-described way, the device identification may be performed. The analysis of the intercepted data communication 220 may include collecting device traffic metadata and filtering relevant identification data points from network flow sent and received by the connected device 200/210 in the directly routed LAN 222 of the CPE 230. In addition to the analysis of raw data, or as an alternative, refined data (such as metadata) such as datasets, markers, connection requests, etc. may be analyzed. A suitable network flow monitoring technology, such as Cisco^{®} NetFlow or alternative network flow monitoring technologies (which may be implemented as a service of the OS of the CPE 230) may be used to intercept the data communication 220. NetFlow, or its equivalents collect IP network traffic as it enters or exits an interface (in the CPE 230, for example), and based on the collected traffic, a source and a destination of the network traffic (in the form of IP addresses) within the data communication 220 may be determined. The CPE 230 (or more specifically the cybersecurity client 252 running on the CPE 230) sends the data points extracted from the data communication 220 (by the NetFlow, for example) to the cybersecurity server 254. The cybersecurity server 254 feeds the data points to an analysis engine, which analyses the extracted data points and provides a model matching device identifier for the connected device 200, 210 based on the data points. The analysis engine is able to detect that the connected device 200, 210, even if it uses an obfuscated active MAC address, is in fact the connected device 200, 210 that originally used an earlier MAC address. The active MAC address and the one or more earlier MAC addresses may be mapped to each other and stored in a database (or another data storage) of the cybersecurity server 254, and such mapped data may be passed back to a database (or other data storage, or even a cache) of the cybersecurity client 252.

As the CPE 230 implements the directly routed LAN 222 for the data communication 220 of the connected device 200, 210, the CPE 230 may intercept the data communication 220.

As used herein, the term "intercepting" refers to user-approved lawful interception or monitoring of the data communication 220, with a purpose and goal of increasing cybersecurity related to the connected device 200, 210 and its operating environment. As the data communication 220 is intercepted, the data communication 220 is accessed and collected between the transmitting device and the receiving device. The data communication 220 may be intercepted even if the digital data transmission units (such as messages) in the data communication 220 are addressed to the receiving device. The intercepting may be implemented so that the data communication 220 is passively monitored, i.e., the data communication 220 is not affected by the intercepting. Alternatively, if needed, the intercepting may include a seizing of the data communication 220, i.e., the data communication 220 is actively influenced so that a connection and/or requests and/or responses are blocked until it may be decided whether a cybersecurity action (such as blocking of the data communication 220) is required.

As used herein, the term "data communication" 220 refers to the transmission and/or reception of (digital) data by the connected device 200, 210. The data communication 220 is transferred using digital data transmission units over a communication medium such as one or more communication channels (implemented by copper wires, optical fibers, and wireless communication using radio spectrum, for example) between the connected device 200, 210 and another network node such as the target website 240, 242. The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200, 210 and other network nodes to implement the successful and reliable data communication 220. The communication protocols may implement a protocol stack with different conceptual protocol layers. In a connection-oriented data communication 220, a connection needs to be established for transferring the payload data. In a connectionless data communication 220, the payload data is transferred over different paths with an independent routing.

FIG. 2B illustrates an example operation environment at home or office 201.

The WAN such as the Internet 224 uses the Internet protocol suite including TCP/IP and UDP/IP to globally connect computer networks so that communication is enabled between connected devices 200, 210 and various Internet services provided typically by websites 240, 242. The Internet 224 comprises public networks, private networks, academic networks, business networks, government networks, etc. interlinked with various networking technologies. The various services provide access to vast World Wide Web (WWW) resources, wherein webpages may be written with Hypertext Markup Language (HTML) or Extensible Markup Language (XML) and accessed by a browser or another application (such as a mobile app) running in the connected device 200, 210.

From the cybersecurity point of view, the Internet services may be divided between legitimate services and fraud services. Legitimate services operate according to moral and ethical standards enforced by law, police, or social pressure. Fraud services do not follow moral and ethical standards, and often perform criminal acts to disclose, steal or damage electronic data, software, or hardware, or disrupt or misdirect services provided by the electronic data, software, and hardware. Fraud services may be fraudulent to the core, i.e., their only reason for existence is to perform malicious acts, but they may also be legitimate services as such, but being infected with malicious software so as to enable criminal acts. The criminal acts in general include, but are not limited to using a backdoor to bypass security mechanisms, make a denial-of-service attack (DoS), also as a distributed denial-of-service (DDoS), installing software worms or keylogger, eavesdropping a communication, phishing, spoofing, tampering, installing malware, etc. Note that different service providers, such as network service providers, cloud service operators, and cybersecurity operators, just to name a few, may operate and/or manage the various network nodes shown in the FIG. 2A and FIG. 2B.

The CPE 230 is located at home or office 201 of a user 204 of the connected device 200. The CPE 230 is stationary equipment connected to a telecommunication circuit of a carrier (such as a network service provider (NSP) offering internet access using broadband or fixed wireless technologies) at a demarcation point. The demarcation point may be defined as a point at which the public Internet 224 ends and connects with the directly routed LAN 222 at the home or office. In this way, the CPE 230 acts as a network bridge, and/or a router.

The CPE 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless) directly routed LAN 222 and thus enabling the user 204 of the connected device 200, 210 to access communication services of the NSP, and the Internet 224. Note that the CPE 230 may also be implemented with wireless technology, such as a 4G or 5G CPE 230 configured to exchange a 5G cellular radio network signal with the WAN 224 of a base station operated by the broadband service provider, and generate a Wi-Fi^{®} (or WLAN) or wired signal to implement the directly routed LAN 222 to provide access for the connected device 200, 210. Furthermore, the 4G/5G CPE 230 performs the conversion between the 4G/5G cellular radio network signal and the Wi-Fi^{®} or wired signal.

FIG. 5A and FIG. 5B illustrate examples of a cybersecurity apparatus 500. The method described with reference to FIG. 1 may be implemented at least partly by the cybersecurity apparatus 500, i.e., the network message processing may be implemented by the cybersecurity apparatus 500. The apparatus 500 may execute the operations defined in the method. The apparatus 500 may implement an algorithm, which includes at least the operations of the method, but may optionally include other operations related to the cybersecurity in general. Note that the method described with reference to FIG. 1 may be implemented as a part of the cybersecurity client 252 running in the CPE 230 as shown in FIG. 2A, or as a functionality embedded in the CPE 230, and as a part of the cybersecurity server 254 running in the computing resource 256. As shown in FIG. 2A, the cybersecurity apparatus 500 may comprise various distributed actors communicatively coupled 270, 272, 274 with each other. The cybersecurity apparatus 500 may provide storage for the local state objects 260 and the remote state objects 262.

The apparatus 500 comprises one or more memories 508, and one or more processors 502 coupled to the one or more memories 508 configured to execute the operations described in FIG. 1.

The term "processor" 502 refers to a device that is capable of processing data. The term "memory" 508 refers to a device that is capable of storing data run-time (= working memory) or permanently (= non-volatile memory).

As shown in FIG. 5A, the one or more processors 502 may be implemented as one or more microprocessors 504, which are configured to execute instructions 506 of a computer program 510 stored on the one or memories 508. The microprocessor 504 implements functions of a central processing unit (CPU) on an integrated circuit. The CPU is a logic machine executing the instructions 506 of the computer program 510. The CPU may comprise a set of registers, an arithmetic logic unit (ALU), and a control unit (CU). The control unit is controlled by a sequence of the instructions 506 transferred to the CPU from the (working) memory 508. The control unit may contain a number of microinstructions for basic operations. The implementation of the microinstructions may vary, depending on the CPU design. The one or more microprocessors 504 may be implemented as cores of a single processor and/or as separate processors. Note that the term "microprocessor" is considered as a general term including, but not being limited to a digital signal processor (DSP), a digital signal controller, a graphics processing unit, a system on a chip, a microcontroller, a special-purpose computer chip, and other computing architectures employing at least partly microprocessor technology. The memory 508 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 510 may be written ("coded") by a suitable programming language, and the resulting executable code may be stored in the memory 508 and executed by the one or more microprocessors 504.

The computer program 510 implements the method/algorithm. The computer program 510 may be coded using a programming language, which may be a high-level programming language, such as Go, Java, C, or C++, or with a low-level programming language, such as an assembler or a machine language. The computer program 510 may be in source code form, object code form, executable file, or in some intermediate form, but for use in the one or more microprocessors 504 it is in an executable form as an application. There are many ways to structure the computer program 510: the operations may be divided into modules, subroutines, methods, classes, objects, applets, macros, etc., depending on the software design methodology and the programming language used. In modern programming environments, there are software libraries, i.e., compilations of ready-made functions, which may be utilized by the computer program 510 for performing a wide variety of standard operations. In addition, an operating system (such as a general-purpose operating system) may provide the computer program 510 with system services.

As shown in FIG. 5A, a computer-readable medium 512 may store the computer program 510, which, when executed by the apparatus 500 (the computer program 510 may first be loaded into the one or more microprocessors 504 as the instructions 506 and then executed by one or more microprocessors 504), causes the apparatus 500 (or the one or more microprocessors 504) to carry out the method/algorithm. The computer-readable medium 512 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 510 to the one or memories 508 of the apparatus 500. In some jurisdictions, depending on the legislation and the patent practice, the computer-readable medium 512 may not be the wired or wireless telecommunications signal.

As shown in FIG. 5B, the one or more processors 502 and the one or more memories 508 may be implemented by a circuitry 520. A non-exhaustive list of implementation techniques for the circuitry 520 includes, but is not limited to application-specific integrated circuits (ASIC) 522, field-programmable gate arrays (FPGA) 524, application-specific standard products (ASSP), standard integrated circuits, logic components, and other electronics structures employing custom-made or standard electronic circuits.

Note that in modern computing environments a hybrid implementation employing both the microprocessor technology of FIG. 5A and the custom or standard circuitry of FIG. 5B is feasible.

Functionality of the apparatus 500, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

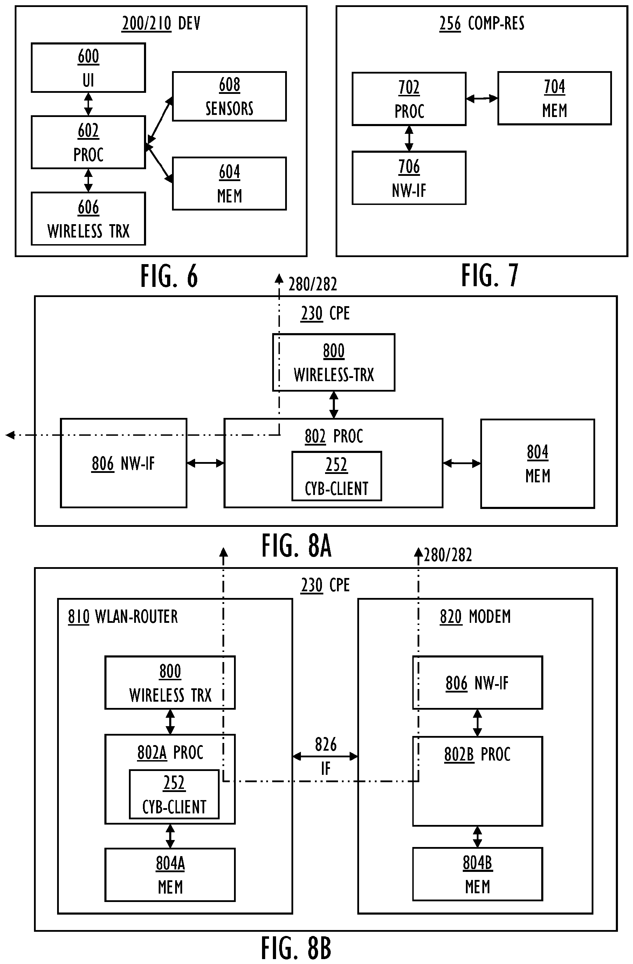

FIG. 6 illustrates an example of the connected device 200, 210. The connected device 200, 210 may be a terminal, a user equipment (UE), a radio terminal, a subscriber terminal, a smartphone, a mobile station, a mobile phone, a desktop computer, a portable computer, a laptop computer, a tablet computer, a smartwatch, smartglasses, another kind of ubiquitous computing device, or some other type of a wired or wireless mobile or stationary communication device operating with or without a subscriber identification module (SIM) or an embedded SIM (eSIM). The connected device 200, 210 may be a personal communication device of the user 204. The connected device may also be an Internet of Things (IoT) device 200, 210, which is provided with processing and communication technology and may also include one or more sensors and a user interface, and may be a stand-alone device, or an embedded device in a lighting fixture, thermostat, home security system, camera, smart lock, smart doorbell, smart refrigerator, or another household appliance, heating and cooling system, home and building automation system, vehicle, health and fitness monitor, remote health monitoring system, environmental sensor, IP camera, or network attached storage (NAS), etc.

As shown in FIG. 6, the connected device 200, 210 comprises one or more memories 604, and one or more processors 602 coupled to the one or more memories 604 configured to carry out the operation of the connected device 200, 210. In addition, the connected device 200, 210 may comprise a user interface 600 (such as a touch screen or one or more LEDs), and one or more wireless transceivers 606 (such as a WLAN transceiver, a cellular radio network transceiver, and a short-range radio transceiver), and also one or more sensors 608. As shown in FIG. 2A, the connected device 200, 210 may be running a cybersecurity application 250.

FIG. 7 illustrates an example of a computing resource 256 such as a server apparatus. The server apparatus 256 may be a networked computer server, which interoperates with the CPE 230 according to a client-server architecture, a cloud computing architecture, a peer-to-peer system, or another applicable distributed computing architecture. As shown in FIG. 7, the server apparatus 256 comprises one or more memories 704, and one or more processors 702 coupled to the one or more memories 704 configured to carry out a part of the method/algorithm. In addition, the server apparatus 256 comprises a network interface (such as an Ethernet network interface card) 706 configured to couple the server apparatus 256 to the Internet 224. As shown in FIG. 2A, the computing resource 256 may be running a cybersecurity server application 254.

FIG. 8A and FIG. 8B illustrate examples of a customer-premises equipment 230.

In FIG. 8A, the CPE 230 is an integrated apparatus comprising one or more memories 804, and one or more processors 802 coupled to the one or more memories 804 configured to carry out a part of the method/algorithm. Additionally, the CPE 230 comprises a wireless radio transceiver 800 configured to create the directly routed WLAN 222 for enabling access by the connected device 200, 210. The CPE 230 also comprises a network interface 806 to act as a modem configured to connect to the telecommunication circuit of the carrier at the demarcation point, i.e., to the WAN 224. The network interface 806 may operate as a Digital Subscriber Line (DSL) modem using different variants such as Very high bitrate DSL (VDSL), Symmetric DSL (SDSL), or Asymmetric DSL (ADSL). The network interface 806 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. As shown also in FIG. 2A, the CPE 230 may be running a cybersecurity client 252.

In FIG. 8B, the CPE 230 is a two-part apparatus. A WLAN router part 810 comprises the one or more memories 804A, the one or more processors 802A coupled to the one or more memories 804A configured to carry out the method/algorithm, and the wireless transceiver 800 to create the directly routed WLAN 222 for enabling access by the connected device 200, 210. A modem part 820 comprises the one or more processors 802B coupled to one or more memories 804B configured to carry out modem operations, and the network interface 806 to act as the modem configured to connect to the WAN 224. The WLAN router part 810 may be purchased by the user 204 of the connected device 200, 210 to gain access to a part of the method/algorithm, whereas the modem part 820 may be provided by a carrier providing the telecommunication circuit access. As shown in FIG. 8B, the WLAN router part 810 and the modem part 820 may be communicatively coupled by an interface 826 (such as a wired Ethernet interface). As shown in FIG. 8B, the platform may be provided by the one or more memories 804A, and the one or more processors 802A, but also additionally, or alternatively, by the one or more memories 804B, and the one or more processors 802B.

Instead of the cybersecurity client 252 illustrated in FIG. 8A and FIG. 8B, another component running on the CPE 230 may be configured to run an algorithm implementing the method of FIG. 1.

The CPE 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the CPE 230 based also on Linux. At the time of writing of this patent application, more information regarding the OpenWrt^{®} may be found in openwrt.org.

As illustrated in FIG. 2A, the functionality of the network message processing including the capability to carry out the method/algorithm, may be implemented in a centralized fashion by a stand-alone single physical unit 230, or alternatively in a distributed fashion using more than one communicatively coupled physical units 230, 256.

These physical units comprise the CPE 230 running the cybersecurity client 252, and the computing resource 256 running the cybersecurity server 254. The method/algorithm operations may be implemented by one or more of these apparatuses 230, 256 executing the cybersecurity software 252, 254.

As can be understood by the person skilled in the art, the method/algorithm operations may be distributed among the distributed software comprising the cybersecurity client 252, and the cybersecurity server 254 in different configurations. In an example, the cybersecurity client 252 communicates 274 with the cybersecurity server 254 to implement the method/algorithm functionality.

Thus, the cybersecurity client 252 may comprise a stand-alone fashion to carry out the method/algorithm, or a part of the functionality augmented by the functionality of the cybersecurity server 254. The cybersecurity client 252 may operate as a frontend with a relatively limited resources as regards to the processor and memory, whereas the cybersecurity server 254 may operate as a backend with a relatively unlimited resources as regards to the processor and memory, and the capability to serve a very large number of the connected devices 200, 210 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A computer-implemented method comprising:
subscribing (108) to network messages in a directly routed local area network, LAN, of a customer-premises equipment, CPE, wherein the CPE is configured to provide the directly routed LAN for data communication, and an access for the data communication to a wide area network, WAN;
receiving (110) the network messages in the directly routed LAN;
aggregating (114) the network messages to local state objects maintained in the CPE, wherein each local state object contains data of a single connected device; and
transmitting (124) update data of the local state objects via the WAN to remote state objects maintained outside of the CPE.

2. The method of claim 1, further comprising:
in response to a start-up (102) of a platform maintaining the local state objects, obtaining (104) the remote state objects; and
initializing (106) the local state objects based on the remote state objects.

3. The method of any preceding claim, further comprising:
intercepting (126) a data communication in the directly routed LAN transmitted by a connected device;
identifying (128) the connected device based on contents of the data communication analyzed in view of the local state objects and/or the remote state objects.

4. The method of any preceding claim, wherein at least a part of the network messages relates to directly routable connected devices connected to the directly routed LAN, and, optionally, the directly routable connected devices connected to the directly routed LAN are configured to transmit the at least the part of the network messages.

5. The method of any preceding claim, wherein at least a part of the network messages relates to indirectly routable connected devices connected to an indirectly routed LAN, and, optionally, the indirectly routed LAN comprises one of a mesh network and a personal area network, PAN.

6. The method of claim 5, wherein the indirectly routable connected devices comprise Internet of Things, IoT, devices.

7. The method of claim 5, wherein a network router is configured to transmit the at least the part of the network messages on behalf of the indirectly routable connected devices, wherein the network router is connected to the directly routed LAN, and to the indirectly routed LAN, and, optionally, the network router is implemented as a border router, a network bridge, a network switch, or a network access point.

8. The method of any preceding claim, wherein receiving (110) the network messages in the directly routed LAN further comprises:
receiving the network messages in the directly routed LAN to discover (112) initial registrations of new connected devices.

9. The method of any preceding claim, further comprising
in response to fulfilling (116) a predetermined condition, triggering (122) transmitting (124) the update data of the local state objects via the WAN to the remote state objects maintained outside of the CPE, wherein, optionally, the predetermined condition is an expiry (118) of a timer and/or a reception (120) of a predetermined number of network messages.

10. The method of any preceding claim, wherein the local state object and the remote state object are stored and transmitted using a schemeless data interchange format that uses attribute-value pairs to store data.

11. The method of any preceding claim, wherein the data of the single connected device in each local state object comprises at least one unique device-specific property of the single connected device.

12. The method of any preceding claim, wherein the network messages comprise one or more of an addition of a new device event, a service announcement, a service deletion, an Internet Protocol, IP, announcement, and an IP request.

13. The method of any preceding claim, wherein the network messages comprise one or more of zero-configuration networking messages, or recurring network messages.

14. An apparatus comprising means for carrying out the method of any preceding claim 1-13.

15. A computer program product comprising instructions which, when executed by an apparatus, cause the apparatus to carry out the method of any preceding claim 1-13.

16. A computer-readable medium comprising a computer program with instructions which, when executed by an apparatus, cause the apparatus to carry out the method of any preceding claim 1-13.
